# FASCICULE DE BREVET EUROPEEN

(11) **EP 4 136 357 B1**
(45) Date de publication et mention de la délivrance du brevet: **12.02.2025**
(21) Numéro de dépôt: 21725574.4
(22) Date de dépôt: 15.04.2021
(51) Int. Cl.: F16B 1/00, B64G 1/64, B64G 1/22

(54) **DISPOSITIF DE MAINTIEN ET DE LIBÉRATION À BAS CHOC ET RÉUTILISABLE**
STOSSARME UND WIEDERVERWENDBARE HALTE- UND FREIGABEVORRICHTUNG
LOW-SHOCK AND REUSABLE RETENTION AND RELEASE DEVICE

(30) Priorité: 16.04.2020 FR 2003837
(43) Date de publication de la demande: 22.02.2023
(73) Titulaire: Centre National d'Études Spatiales, 75039 Paris Cedex 01 (FR)
(72) Inventeur: SICRE, Jacques, 31401 Toulouse Cedex 9 (FR)
(74) Mandataire: Germain Maureau
(86) Numéro de dépôt international: PCT/FR2021/050668
(87) Numéro de publication internationale: WO 2021/209724

(56) Documents cités:
- CN-A- 106 335 653
- CN-A- 109 131 951
- CN-A- 109 606 737
- KR-B1- 101 120 625
- US-A- 5 160 233
- US-A- 5 718 531
- US-A- 6 126 115

## Description

La présente invention concerne le domaine des composants de gerbage et de dégerbage à bas choc.

Il est connu de maintenir un appendice assemblé ou lié avec un autre équipement en utilisant un tirant de gerbage dont au moins une extrémité est enserrée entre au moins deux éléments de serrage, les au moins deux éléments de serrage étant solidaires de l'appendice ou de l'autre équipement, et étant configurés pour maintenir serrée l'extrémité du tirant, de manière à assurer la liaison d'assemblage entre l'autre équipement et l'appendice. Il est également connu de libérer le tirant de gerbage en desserrant les éléments de serrage en utilisant un moyen pyrotechnique ou non pyrotechnique. Le document CN 106 335 653 A divulgue notamment un dispositif de maintien et de libération d'un tirant de gerbage comprenant un composant de serrage, un composant de maintien et de libération et au moins un composant de desserrage, le composant de maintien et de libération comprenant une pluralité de segments, au moins deux segments de la pluralité de segments comprenant chacun une première surface d'appui configurée pour s'appuyer sur une partie du barreau de transmission, de sorte que la partie du barreau de transmission est maintenue pressée entre et/ou en appui sur lesdites première surface d'appui de l'au moins deux segments lorsque la pluralité de segments est dans une configuration de maintien sous l'effet d'une pression de serrage générée par le composant de serrage, au moins deux autres segments de la pluralité de segments comprenant chacun une deuxième surface d'appui configurée pour s'appuyer sur une extrémité de l'au moins un composant de desserrage, chaque segment de l'au moins deux autres segments pouvant être aussi un segment de l'au moins deux segments. Le dispositif divulgué par D1 ne permet pas qu'il soit réarmer simplement.

Les inconvénients de ces dispositifs de maintien et de libération d'un tirant de gerbage sont d'une part de générer un choc lors de la libération du tirant de gerbage, notamment dans le cas de l'utilisation d'un moyen pyrotechnique, d'autre part de ne pas pouvoir être réarmé « in situ », autrement dit de ne pas pouvoir être réutilisé sans démontage. Enfin, l'encombrement des dispositifs existants n'est pas adapté à tous les besoins, notamment aux besoins liés aux nano satellites.

L'invention a donc pour but de proposer une solution à tout ou partie de ces problèmes.

A cet effet, la présente invention concerne un dispositif réutilisable pour le maintien et la libération d'un barreau de transmission, le dispositif comprenant un composant de serrage, un composant de maintien et de libération et au moins un composant de desserrage, le composant de maintien et de libération comprenant une pluralité de segments, au moins deux segments de la pluralité de segments comprenant chacun une première surface d'appui configurée pour s'appuyer sur une partie du barreau de transmission, de sorte que la partie du barreau de transmission est maintenue pressée entre et/ou en appui sur lesdites première surface d'appui de l'au moins deux segments lorsque la pluralité de segments est dans une configuration de maintien sous l'effet d'une pression de serrage générée par le composant de serrage, au moins deux autres segments de la pluralité de segments comprenant chacun une deuxième surface d'appui configurée pour s'appuyer sur une extrémité de l'au moins un composant de desserrage, chaque segment de l'au moins deux autres segments pouvant être aussi un segment de l'au moins deux segments, l'au moins un composant de desserrage étant réalisé dans un premier matériau à mémoire de forme simple effet, ledit premier matériau étant configuré pour qu'à partir d'une température de transition, chaque extrémité de l'au moins un composant de desserrage exerce, sur la deuxième surface d'appui de chaque segment de l'au moins deux autres segments, une pression de desserrage, ladite pression de desserrage compensant la pression de serrage générée par le composant de serrage, en faisant subir une déformation au composant de serrage, de façon à placer la pluralité de segments du composant de maintien et de libération en configuration de libération, dans laquelle la partie du barreau de transmission est libérée.

Selon un mode de réalisation, l'invention comprend une ou plusieurs des caractéristiques suivantes, seules ou en combinaison techniquement acceptable.

Selon un mode de réalisation, la déformation du composant de serrage est une déformation plastique, le composant de serrage étant réalisé dans un deuxième matériau apte à être déformé plastiquement de manière à générer la pression de serrage nécessaire au maintien en configuration de maintien de la pluralité de segments; la pression de serrage ainsi générée par le composant de serrage étant déterminée de manière à pouvoir être compensée par la pression de desserrage exercée en sens contraire par l'au moins un composant de desserrage, de sorte que la pluralité de segments prend la configuration de libération; la déformation plastique est produite lorsqu'une température du premier matériau du composant de desserrage est augmentée à partir de la température de transition, sous l'effet de la pression qu'exerce alors l'au moins un composant de desserrage sur la deuxième portion de la surface de chaque segment de la pluralité de segments.

Selon ce mode de réalisation, le deuxième matériau est un matériau classique, par exemple de l'aluminium, ou de l'acier, apte à être déformé plastiquement, c'est-à-dire que ses déformations peuvent être irréversibles, au-delà du seuil élastique.

Selon ces dispositions, le dispositif est configuré pour passer de la configuration de maintien à la configuration de libération du tirant de gerbage sans choc, par exemple sans choc pyrotechnique ou élastique. Seul un réarmement manuel du dispositif est possible, avec le remplacement du composant de serrage déformé plastiquement, de manière irréversible, ce qui nécessite alors un démontage du dispositif.

Selon un mode de réalisation, la déformation du composant de serrage est une déformation élastique d'un deuxième matériau du composant de serrage (3,3'), configuré pour reprendre une première forme après avoir subi ladite déformation élastique.

Selon un mode de réalisation, le deuxième matériau est un matériau non seulement élastique, mais également superélastique, c'est-à-dire que l'extension de la déformation réversible du deuxième matériau est très supérieure à celle d'un matériau simplement élastique.

Selon ces dispositions, les déformations du matériau élastique ou superélastique sont réversibles, au contraire du mode de réalisation dans lequel le deuxième matériau est un matériau apte à être déformé plastiquement.

Selon un mode de réalisation le deuxième matériau superélastique peut être un matériau à mémoire de forme superélastique.

Selon ces dispositions l'extension de la déformation réversible peut être beaucoup plus importante qu'avec un matériau superélastique sans mémoire de forme.

Selon un mode de réalisation le deuxième matériau à mémoire de forme superélastique peut, par exemple, être choisi parmi les matériaux de la liste non exhaustive suivante : NiTiCu, CuAlNi, CuAlBe, CuZnAl, FeMnAlNi.

Selon ces dispositions, le dispositif est configuré pour alternativement maintenir ou libérer l'extrémité du barreau de transmission, et notamment pour passer de la configuration de libération à la configuration de maintien, autrement dit le dispositif est réversible, c'est à dire réarmable, « in situ » sans intervention manuelle.

Selon ces dispositions, le composant de serrage assiste le retour de l'au moins un composant de desserrage à sa forme initiale.

Selon un mode de réalisation, les composants de serrage et de desserrage peuvent être fusionnés en un seul et même composant dit de serrage/desserrage qui assure alors les deux fonctions (serrage a température basse et desserrage à température haute). Le matériau du composant de serrage/desserrage est alors un matériau à mémoire de forme double sens ce qui permet au composant de revenir à sa forme initiale à température basse sans assistance.

Selon un mode de réalisation, le composant de serrage comprend au moins un élément longitudinal, et dans lequel le composant de maintien et de libération comprend une première partie comprenant deux segments et une deuxième partie comprenant deux autres segments de la pluralité de segments, l'au moins un élément longitudinal étant attaché solidairement par chaque extrémité de l'au moins un élément longitudinal respectivement à l'un des deux segments de la première partie et à l'un des deux autres segments de la deuxième partie.

Selon un mode de réalisation, l'au moins un composant de desserrage est longitudinal et disposé parallèlement à l'au moins un élément longitudinal du composant de serrage.

Selon un mode de réalisation, le composant de serrage comprend deux éléments longitudinaux, et le dispositif comprend deux composants de desserrage longitudinaux, disposés chacun parallèlement à l'un des deux éléments longitudinaux.

Selon un mode de réalisation, les deux segments de la première partie forment une seule pièce.

Selon un mode de réalisation, les deux segments de la deuxième partie forment une seule autre pièce.

Selon un mode de réalisation, le composant de serrage a la forme d'un cylindre creux autour de la pluralité de segments.

Selon un mode de réalisation, une troisième surface d'appui d'au moins deux segments de la pluralité de segments est configurée pour s'appuyer sur une surface interne du cylindre creux formé par le composant de serrage.

Selon un mode de réalisation, lorsque la pluralité de segments est dans une configuration de maintien, la première surface d'appui de chaque segment de l'au moins deux segments prend une forme d'appui cylindrique filetée. Selon ces dispositions, le filetage étant configuré pour recevoir un filetage complémentaire de l'extrémité du barreau de transmission, le barreau de transmission peut être vissé dans le dispositif en configuration de maintien, et libérer sans dévissage.

Selon un mode de réalisation, lorsque la pluralité de segments est dans une configuration de maintien, la première surface d'appui de chaque segment de l'au moins deux segments prend une forme d'appui cônique.

Selon un mode de réalisation, la forme d'appui peut être par exemple conique ou sphérique ou en forme de goulotte.

Selon ces dispositions, la forme d'appui permet de recevoir une partie du barreau de transmission, une extrémité par exemple, ladite partie ayant une forme complémentaire, par exemple une forme de cône ou de sphère, de sorte qu'une configuration de libération partielle de ladite forme d'appui peut être définie, dans laquelle la tension de charge du barreau de transmission est réduite. Cette configuration est particulièrement avantageuse pour réduire les précharges installées communément dans les colonnes de gerbage ou dans les roulements. Pour les roulements, il peut être intéressant de relâcher cette précharge après une phase de lancement d'un véhicule spatial sur lequel est montée une pièce arrimée via le barreau de transmission, phase pendant laquelle cette précharge doit être maintenue élevée pour passer les vibrations sans jeu, alors qu'il est préférable de réduire cette charge pendant les phases suivantes de la vie du roulement pour diminuer les contraintes internes, réduire les couples de frottement et ainsi allonger la durée de vie et autoriser une motorisation plus légère pour entrainer en rotation le roulement. Pour les colonnes de gerbage, cela permet de réduire l'énergie élastique emmagasinée de façon à réduire le choc généré lors de la libération brusque d'un tirant de gerbage.

L'invention concerne également un système de maintien en tension, comprenant un dispositif selon l'un des modes de réalisation de l'invention décrit ci-avant, et comprenant le barreau de transmission, le barreau de transmission étant un tirant sollicité en tension selon un axe du barreau de transmission, lorsque le composant de maintien et de libération est en configuration de maintien.

L'invention concerne également un système de maintien en rotation, comprenant un dispositif selon l'un des modes de réalisation décrit ci-avant, et comprenant le barreau de transmission, le barreau de transmission étant mobile en rotation autour d'un axe du barreau de transmission entre une première position angulaire et une deuxième position angulaire, lorsque le composant de maintien et de libération est en configuration de libération.

Selon ces dispositions, le système de maintien en rotation peut servir de point de gerbage lors des vibrations pendant la phase de lancement du véhicule, lorsque le composant de maintien et de libération est en configuration de maintien, avant de passer en configuration de libération, par chauffage du composant de desserrage, pour le déploiement d'un appendice, par exemple un panneau solaire, motorisé par un ressort annexe, puis de se verrouiller en position déployée en fin de déploiement, le barreau de transmission étant à nouveau serré entre les segments du composant de maintien et de libération, après refroidissement du composant de desserrage.

Selon un mode de réalisation, le composant de serrage comprend au moins un ressort ou au moins un ensemble de rondelles élastiques, l'au moins un ressort ou l'au moins un ensemble de rondelles élastiques étant comprimé entre une face d'un segment du composant de maintien et de libération et une face d'un autre segment du composant de maintien et de libération, ledit segment du composant de maintien et de libération étant logé à l'intérieur d'une cavité formée dans ledit autre segment du composant de maintien et de libération.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.
[Fig. 1] est une vue en perspective d'un dispositif selon un mode de réalisation de l'invention en configuration fermée (gerbage)
[Fig. 2] est une autre vue en perspective du dispositif selon le mode de réalisation de la figure 1 en configuration ouverte (dégerbage)
[Fig. 3] est une vue en coupe d'un dispositif selon un autre mode de réalisation de l'invention.
[Fig. 4] est une vue en coupe d'un dispositif selon l'un des modes de réalisation de l'invention configuré pour recevoir une extrémité en cône d'un tirant de gerbage.
[Fig. 5] est une vue en coupe d'un dispositif selon un autre mode de réalisation de l'invention configuré pour recevoir une extrémité filetée d'un tirant de gerbage.
[Fig. 6] est une vue en perspective d'un dispositif selon un troisième mode de réalisation de l'invention, en configuration repliée et verrouillée.
[Fig. 7] est une vue en perspective du dispositif selon le troisième mode de réalisation de l'invention, en cours de déploiement.
[Fig. 8] est une vue en perspective du dispositif selon le troisième mode de réalisation de l'invention, en configuration déployée et verrouillée.
[Fig. 9] est une vue en coupe du dispositif selon le troisième mode de réalisation de l'invention.
[Fig. 10] est une vue en coupe du dispositif selon un autre mode de réalisation de l'invention.

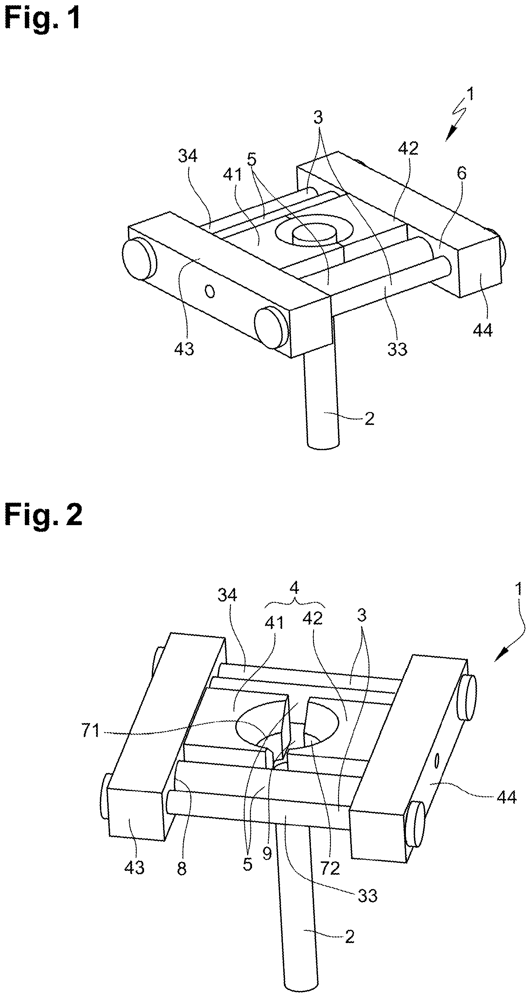

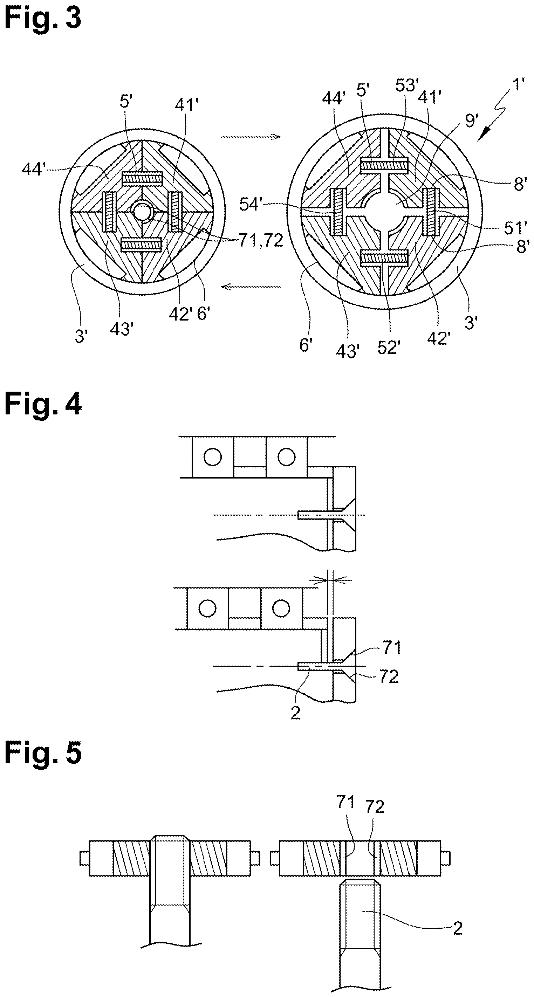

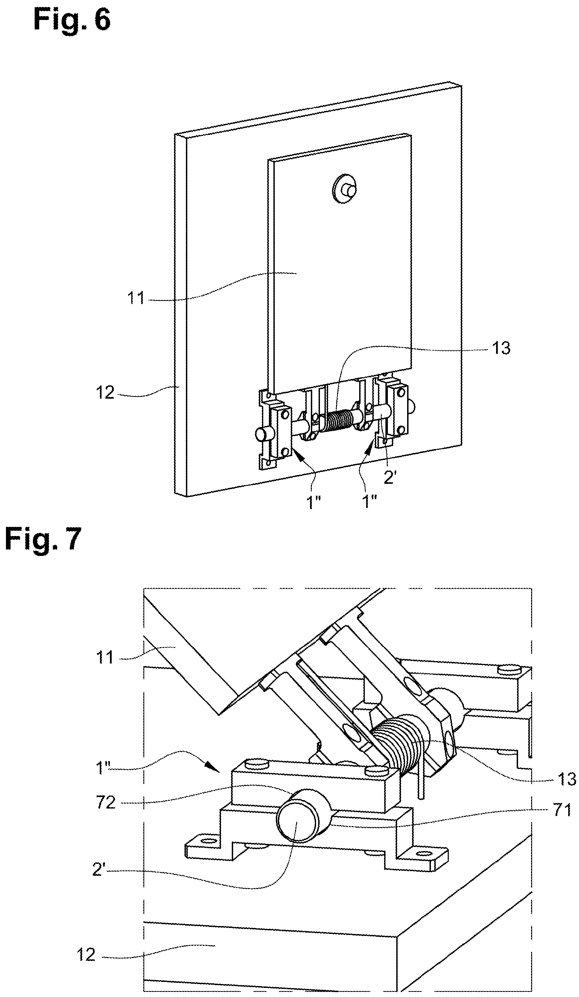

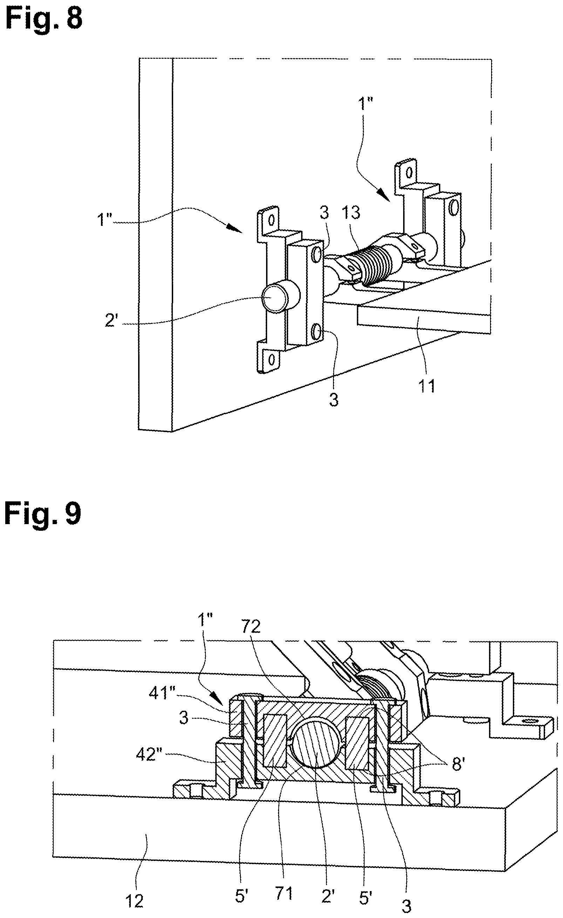

L'invention concerne un dispositif 1, 1', 1" pour le maintien puis la libération, ou pour le gerbage puis le dégerbage, d'un barreau de transmission *2,* 2'. Les figures 1 et 2 illustrent un mode de réalisation 1 du dispositif selon l'invention, la figure 3 illustre un autre mode de réalisation 1' du dispositif selon l'invention, et les figures 6,7, 8 et 9 illustrent encore un autre mode de réalisation 1" du dispositif selon l'invention Le dispositif est réutilisable au sens où, après avoir servi une fois pour maintenir puis pour libérer le barreau de transmission *2,* 2'*,* il peut à nouveau reprendre la configuration de maintien sans qu'il soit nécessaire de le «réarmer» manuellement.

Le barreau de transmission *2,* 2' désigne ici tout type d'objet destiné à transmettre un effort ou une force de maintien à un objet annexe 11, fixé au barreau de transmission, et par conséquent fixé, via le barreau de transmission *2,* 2', au dispositif 1, 1', 1" de maintien et de libération selon l'invention. Le dispositif 1, 1', 1" selon l'invention est ainsi un moyen d'arrimage de l'objet annexe 11 à une partie 12 d'un objet principal, non représenté sur les figures, qui porte le dispositif 1, 1', 1" selon l'invention et auquel le dispositif 1, 1', 1" selon l'invention est solidairement attaché. L'objet principal peut par exemple être un véhicule, un véhicule spatial, un satellite par exemple. L'homme du métier comprendra que ces exemples ne sont pas limitatifs et l'objet principal peut prendre d'autre forme. L'objet annexe 11 peut être par exemple un générateur solaire 11 arrimé une paroi 12 du véhicule. L'objet annexe 11 peut devoir être maintenu fermement sur le véhicule, avec un minimum de jeu et selon une charge d'effort maximale subie par le barreau de transmission et transmise à l'objet annexe 11, de sorte que l'objet annexe 11 soit mécaniquement totalement solidaire du véhicule, pendant une phase de la mise en œuvre du véhicule qui porte l'objet annexe 11, ladite phase pouvant, par exemple, être une phase de lancement d'un satellite; pendant cette phase de lancement, une précharge importante peut être nécessaire pour passer les vibrations qui accompagnent cette phase sans jeu ; pendant une autre phase de la mise en œuvre du véhicule qui porte l'objet annexe 11, l'objet annexe peut devoir être libérer, totalement, ou partiellement pour introduire un jeu, en réduisant ou en annulant la charge d'effort subie par **le** barreau de transmission *2,* 2' et transmise à l'objet annexe 11 ; cette libération partielle, peut servir par exemple à permettre à l'objet annexe 11 de se déployer d'une première position vers une deuxième position comme cela est illustré sur les figures 6, 7 et 8. Le dispositif 1, 1', 1" peut aussi être utilisé pour certains engins avant leur entrée dans l'atmosphère ou pour lier/libérer les satellites entre eux lors d'un lancement «en grappe».

Un premier mode de réalisation de l'invention va maintenant être décrit en référence aux figures 1 et 2. Selon ce premier mode de réalisation, le dispositif 1, pour le maintien et la libération d'un barreau de transmission 2, comprend un composant de maintien et de libération 4, un composant de serrage 3, et un composant de desserrage 5.

Selon ce premier mode de réalisation de l'invention, le composant de maintien et de libération 4 comprend une pluralité de segments 41, 42, 43, 44. Les segments 41 et 43 peuvent par exemple être solidaires mécaniquement, jusqu'à ne former qu'une seule pièce ; de même, segments 42 et 44 peuvent par exemple être solidaires mécaniquement, jusqu'à ne former qu'une seule autre pièce. Au moins deux segments 41, 42 de la pluralité de segments 41, 42, 43, 44 qui forment le composant de maintien et de libération 4, comprennent chacun une surface d'appui 71, 72 configurée pour s'appuyer sur une extrémité du barreau de transmission 2 ; l'extrémité du barreau de transmission 2 est ainsi maintenue pressée entre lesdites surface d'appui 71, 72 de l'au moins deux segments 41, 42, lorsque la pluralité de segments 41, 42, 43, 44, est dans une configuration de maintien.

La pluralité de segments 41, 42, 43, 44, formant le composant de maintien et de libération 4 est dans la configuration de maintien sous l'effet d'une pression de serrage générée par le composant de serrage 3. Selon le premier mode de réalisation, le composant de serrage 3 comprend au moins un élément longitudinal 33, 34, l'au moins un élément longitudinal 33, 34 étant attaché solidairement par chaque extrémité respectivement à l'un 43 des deux segments 41, 43 et à l'un 44 des deux autres segments 42, 44.

Le composant de serrage 3 est configuré pour exercer ladite pression de serrage; ainsi par exemple, ledit composant de serrage 3 peut subir une déformation élastique, le composant de serrage 3 étant réalisé dans un matériau apte à être déformé élastiquement pour génèrer la pression de serrage nécessaire au maintien en configuration de maintien de la pluralité de segments 41, 42, 43, 44.

La déformation élastique est choisie, en fonction du matériau considéré, de manière à ce que la pression de serrage soit suffisante pour assurer le maintien en configuration de maintien de la pluralité de segments 41, 42, 43, 44, c'est à dire en exercant la charge nécessaire sur une partie du barreau de transmission 2.

D'autre part la pression de serrage est compensée par une pression de desserrage exercée en sens contraire par le composant de desserrage 5 ; à cet effet le composant de desserrage peut être réalisé par exemple dans un matériau à mémoire de forme simple effet, configuré pour qu'à partir d'une température de transition, la pression de desserrage exercée par chaque extrémité du composant de desserrage 5 sur une surface d'appui 8 de deux autres segments 43, 44, parmi la pluralité de segments 41, 42, 43, 44, de manière à compenser la pression de serrage et à écarter les les segments 43, 44, et annuler la charge exercée par les segments 41 et 42 sur le barreau de transmission 2; Ainsi, la pluralité de segments 41, 42, 43, 44, prend la configuration de libération, et libére le barreau de transmission 2.

L'écartement des segments 43 et 44, qui accompagne la libération du barreau de transmission 2, provoque également une déformation supplémentaire du composant de serrage 3, solidairement attaché auxdits segments 43 et 44 ; cette déformation supplémentaire peut être plastique ou élastique.

Si le matériau du composant de serrage 3 est un matériau classique, par exemple de l'aluminium, ou de l'acier, et que la déformation supplémentaire induite dépasse le seuil de déformation élastique dudit matériau, alors la déformation est plastique et irréversible. Dans ce cas, un réarmement manuel du dispositif sera nécessaire pour remettre le dispositif 1 dans sa configuration de maintien, avec en particulier le remplacement manuel du composant de serrage 3 déformé, ce qui nécessite un démontage du dispositif. Mais néanmoins, le dispositif 1 configuré avec un composant de serrage en matériau classique permet de passer de la configuration de maintien à la configuration de libération sans choc, notamment sans choc pyrotechnique ou élastique.

Si le matériau du composant de serrage 3 est un matériau élastique, le composant de serrage est alors configuré pour reprendre naturellement sa position initiale après avoir été déformé élastiquement par l'écartement des 43 et 44 induit par la pression de desserrage exercée par le composant de desserrage 5, lorsque cette pression de desserrage disparaît. Si le matériau du composant de serrage 3 est non seulement élastique, mais également superélastique, l'extension de la déformation réversible peut-être plus importante. Lorsque le matériau du composant de serrage 3 est élastique, voire superélastique, le dispositif revient donc naturellement dans sa configuration de maintien lorsque disparaît la pression de desserrage exercée par le composant de desserrage 5.

Si le matériau du composant de serrage 3 est un matériau élastique, voire superélastique, et à mémoire de forme, alors l'extension de la déformation réversible peut être encore beaucoup plus importante qu'avec un matériau superélastique sans mémoire de forme. Le matériau superélastique à mémoire de forme peut, par exemple, être choisi parmi les alliages de la liste non exhaustive suivante : NiTiCu, CuAlNi, CuAlBe, CuZnAl, FeMnAlNi.

Si le matériau du composant de serrage 3 est un matériau élastique, superélastique, ou superélastique à mémoire de forme, alors le dispositif 1 est configuré pour alternativement maintenir ou libérer l'extrémité du barreau de transmission 2, et notamment pour revenir naturellement, lorsque la pression de desserrage disparaît, de la configuration de libération à la configuration de maintien, autrement dit le dispositif est réversible, c'est à dire réarmable, « in situ » . La pression de desserrage disparait du fait de l'arrêt du chauffage du composant de desserrage en alliage à mémoire de forme qui peut alors refroidir et revenir à sa forme initiale sous l'effet de ou grace à l'élément de serrage élastique.

Pour que le composant de desserrage 5 exerce la pression de desserrage nécessaire au passage de la configuration de maintien à la configuration de libération du dispositif 1, le composant de desserrage 5 peut être réalisé, au moins en partie, dans un matériau à mémoire de forme simple effet, i.e. configuré pour qu'à partir d'une température de transition, la pression de desserrage exercée par chaque extrémité du composant de desserrage 5 sur la surface d'appui 8 des segments 43, 44 compense la pression de serrage du composant de serrage 3. Le matériau du composant de desserrage 5 étant à mémoire de forme, il reprend sa forme initiale naturellement (effet mémoire double sens) ou avec l'assistance de l'élément de desserrage (effet mémoire double sens assisté) lorsque la température revient à sa température initiale.

Selon ces dispositions, le composant de serrage 3 assiste le retour de l'au moins un composant de desserrage 5 à sa forme initiale.

Selon un mode de réalisation, les composants de serrage et de desserrage peuvent être fusionnés en un seul et même composant dit de serrage/desserrage qui assure alors les deux fonctions (serrage a température basse et desserrage à température haute). Le matériau du composant de serrage/desserrage est alors un matériau à mémoire de forme double sens qui permet au composant de revenir à sa forme initiale à température basse sans assistance.

Selon un mode de réalisation, le composant de serrage comprend deux éléments longitudinaux 33, 34, et le dispositif comprend deux composants de desserrage 5 longitudinaux, disposés chacun parallèlement à l'un des deux éléments longitudinaux 33, 34 du composant de serrage 3.

Selon un mode de réalisation, l'au moins un composant de desserrage 5 est longitudinal et disposé parallèlement à l'élément longitudinal 33, 34 du composant de serrage 3.

Un deuxième mode de réalisation du dispositif 1' selon l'invention va maintenant être décrit en référence à la figure 3. Selon ce deuxième mode de réalisation, le dispositif 1' comprend un composant de serrage 3' ayant la forme d'un cylindre creux autour de la pluralité de segments 41', 42', 43', 44' du composant de maintien et de libération 4.

Selon ce deuxième mode de réalisation, les segments de la pluralité de segments 41', 42', 43', 44' du composant de maintien et de libération 4 comprennent une surface d'appui 10 configurée pour s'appuyer sur le composant de serrage 3, sur la surface interne du cylindre creux.

Selon ce deuxième mode de réalisation, le composant de desserrage 5 comprend quatre composants de desserrage 51', 52', 53,' 54', i.e. un pour chaque paire de segments du composant de maintien et de libération 4, chaque composant de desserrage 51', 52', 53,' 54' étant configuré pour que chacune de ses extrémités s'appuie respectivement sur une surface d'appui 8' d'un segment de la paire de segments qui lui est associée.

La figure 3 présente, sur la gauche de la figure, le dispositif 1' en configuration de maintien, le composant de serrage 3' maintenant les segments 41', 42', 43', 44' du composant de maintien et de libération 4 serrés les uns contre les autres, en appuyant radialement sur la surface d'appui 10 de chacun de ces segments. La figure 3 présente, sur la droite de la figure, le dispositif 1' en configuration de libération, lorsque chaque composant de desserrage 51', 52', 53,' 54' a été chauffé à une température supérieure ou égale à la température de fin de transition du matériau à mémoire de forme constituant, au moins en partie, ces composants de desserrage. La pression de desserrage exercée par chaque composant de desserrage 51', 52', 53,' 54' sur la paire de segments du composant de maintien et de libération 4 qui lui est associée, compense la pression de serrage du composant de serrage 3' et écarte les segments de chaque paire de segments du composant de maintien et de libération 4.

Selon le premier ou le deuxième mode de réalisation, la surface d'appui 71, 72 de chaque segment de la pluralité de segments 41', 42', 43', 44' du composant de maintien et de libération 4 est configurée pour prendre une forme d'appui conique ou sphérique ou filetée ou autre; avec une forme d'appui conique, lorsque le dispositif 1, 1' est en configuration de maintien avec les segments 41', 42', 43', 44' serrés l'un contre l'autre, la partie du barreau de transmission 2 est maintenue à l'intérieur de la forme d'appui conique, comme cela est illustré sur la figure 4. Ainsi, si la partie maintenue, l'extrémité par exemple, a, elle aussi, une forme, conique ou sphérique par exemple, complémentaire de la forme conique des surfaces d'appui 71, 72, alors une configuration de libération partielle de ladite forme d'appui peut être définie, dans laquelle la tension de charge du barreau de transmission 2 est réduite, comme cela est illustré en bas de la figure 4. Cette configuration est particulièrement avantageuse pour réduire les précharges installées communément dans les colonnes de gerbage ou dans les roulements. Pour les roulements, il peut être intéressant de relâcher cette précharge-après une phase de lancement d'un véhicule spatial sur lequel est montée une pièce arrimée via le barreau de transmission, phase pendant laquelle cette précharge doit être maintenue élevée pour passer les vibrations sans jeu, alors qu'il est préférable de réduire cette charge pendant les phases suivantes de la vie du roulement pour diminuer les contraintes internes, réduire les couples de frottement et ainsi allonger la durée de vie et autoriser une motorisation plus légère du roulement. Pour les colonnes de gerbage, cela permet de réduire l'énergie élastique emmagasinée de façon à réduire le choc généré lors de la libération brusque d'un tirant de gerbage.

Selon le premier ou le deuxième mode de réalisation, la forme d'appui conique ou cylindrique de la surface d'appui 71, 72 de chaque segment de la pluralité de segments 41', 42', 43', 44' du composant de maintien et de libération 4 peut être filetée, ou munie de goulottes. Selon ces dispositions, le filetage étant configuré pour recevoir un filetage complémentaire de la partie du barreau de transmission 2, ou les goulottes étant configurées pour recevoir une forme complémentaire de la partie du barreau de transmission 2, le barreau de transmission 2 peut être vissé dans le dispositif ou enserré dans les goulottes en configuration de maintien, et libérer sans dévissage, comme cela est illustré sur la partie droite de la figure 5.

Selon un aspect l'invention concerne un système de maintien comprenant un dispositif 1, 1' tel que décrit ci-avant, et le barreau de transmission 2 maintenu par le dispositif 1, 1".

Selon le premier mode de réalisation ou le deuxième mode de réalisation du d dispositif décrit ci-avant, le barreau de transmission 2 est un tirant sollicité en tension selon un axe du barreau de transmission 2, lorsque le composant de maintien et de libération 4 est en configuration de maintien.

Un autre mode de réalisation du dispositif de maintien 1" et du système de maintien selon l'invention va maintenant être décrit en référence aux figures 6, 7, 8 et 9, dans lequel le barreau de transmission 2 étant mobile et actionné en rotation autour d'un axe du barreau de transmission, entre une première position angulaire et une deuxième position angulaire, lorsque le composant de maintien et de libération 4 est en configuration de libération.

Selon ces dispositions, illustrées par les figures 6 à 9, le dispositif peut servir de point de gerbage lors des vibrations pendant la phase de lancement du véhicule, lorsque le composant de maintien et de libération 4 est en configuration de maintien, avant de passer en configuration de libération, par chauffage du composant de desserrage, pour le déploiement d'un appendice 11, par exemple un panneau solaire 11, motorisé par exemple par un ressort annexe 13, puis de se verrouiller en position déployée en fin de déploiement, le barreau de transmission étant à nouveau serré entre les segments du composant de maintien et de libération, après refroidissement du composant de desserrage.

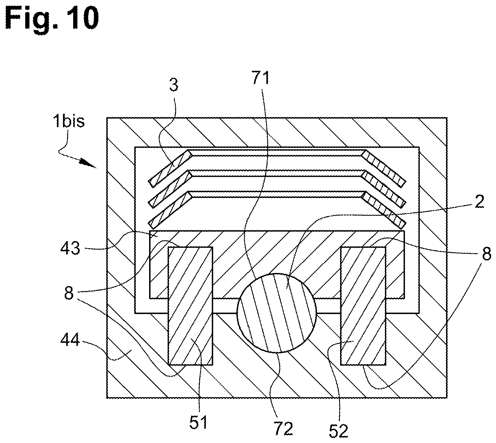

Un autre mode de réalisation du dispositif 1bis selon l'invention va maintenant être décrit en référence à la figure 10. Selon ce mode de réalisation, le dispositif 1bis comprend un composant de serrage 3 prenant la forme d'au moins un ressort ou d'au moins un ensemble de rondelles élastiques, du type Belleville.

Selon ce mode de réalisation, le composant de maintien et de libération 4 comprend deux segments 43, 44 qui comprennent chacun une première surface d'appui 71, 72 configurée pour s'appuyer sur le barreau de transmission 2, et une surface d'appui, et une deuxième surface d'appui 8 configurée pour s'appuyer sur une extrémité de l'au moins un composant de desserrage 51, 52.

Selon ce mode de réalisation, un des segments 43 du composant de maintien et de libération est logé à l'intérieur d'une cavité formée dans l'autre segment 44 du composant de maintien et de libération, de sorte que le ou les ressort(s) 3 ou ensemble(s) de rondelles élastiques 3 sont comprimés entre une face du segment 43 et une face de l'autre segment 44 du composant de maintien et de libération, pour maintenir le segment 43 et l'autre segment 44 du composant de maintien et de libération dans la configuration de maintien. Le ou les composant(s) de desserrage 51, 52 étant configuré pour s'appuyer sur la deuxième surface d'appui 8 située d'une part sur une autre face du segment 43 et une autre face de l'autre segment 44 du composant de maintien et de libération.

## Revendications

1. Dispositif (1, 1', 1") réutilisable pour le maintien et la libération d'un barreau de transmission *(2, 2"),* le dispositif (1, 1', 1") comprenant un composant de serrage (3, 3'), un composant de maintien et de libération (4) et au moins un composant de desserrage (5,5'), le composant de maintien et de libération (4) comprenant une pluralité de segments (41, 42, 43, 44, 41', 42', 43', 44', 41", 42"), au moins deux segments (41, 42, 41', 42', 43', 44', 41", 42") de la pluralité de segments comprenant chacun une première surface d'appui (71, 72) configurée pour s'appuyer sur une partie du barreau de transmission (2), de sorte que la partie du barreau de transmission (2) est maintenue pressée entre et/ou en appui sur lesdites première surface d'appui (71, 72) de l'au moins deux segments (41, 42, 41', 42', 43', 44', 41", 42") lorsque la pluralité de segments (41, 42, 43, 44, 41', 42', 43', 44', 41", 42") est dans une configuration de maintien sous l'effet d'une pression de serrage générée par le composant de serrage (3, 3'), au moins deux autres segments (43, 44, 41', 42', 43', 44', 41", 42") de la pluralité de segments (41, 42, 43, 44, 41', 42', 43', 44', 41", 42") comprenant chacun une deuxième surface d'appui (8, 8') configurée pour s'appuyer sur une extrémité de l'au moins un composant de desserrage (5,5'), chaque segment de l'au moins deux autres segments (43, 44, 41', 42', 43', 44', 41", 42") pouvant être aussi un segment de l'au moins deux segments (41, 42, 41', 42', 43', 44', 41", 42"),
**caractérisé en ce que** l'au moins un composant de desserrage (5,5') est réalisé dans un premier matériau à mémoire de forme simple effet ledit premier matériau étant configuré pour qu'à partir d'une température de transition, chaque extrémité de l'au moins un composant de desserrage (5,5') exerce, sur la deuxième surface d'appui (8,8') de chaque segment de l'au moins deux autres segments (43, 44, 41', 42', 43', 44', 41", 42"), une pression de desserrage, ladite pression de desserrage compensant la pression de serrage générée par le composant de serrage (3,3'), en faisant subir une déformation au composant de serrage (3,3'), de façon à placer la pluralité de segments (41, 42, 43, 44, 41', 42', 43', 44', 41", 42") du composant de maintien et de libération (4) en configuration de libération, dans laquelle la partie du barreau de transmission *(2,* 2") est libérée.

2. Dispositif (1, 1') selon la revendication 1, dans lequel la déformation du composant de serrage est une déformation élastique d'un deuxième matériau du composant de serrage (3,3'), configuré pour reprendre une première forme après avoir subi ladite déformation élastique.

3. Dispositif (1) selon l'une des revendications 1 ou 2, dans lequel le composant de serrage (3) comprend au moins un élément longitudinal (33, 34), et dans lequel le composant de maintien et de libération (4) comprend une première partie comprenant deux segments (41,43) et une deuxième partie comprenant deux autres segments (42,44) de la pluralité de segments (41, 42, 43, 44), l'au moins un élément longitudinal (33, 34) étant attaché solidairement par chaque extrémité de l'au moins un élément longitudinal (33, 34) respectivement à l'un des deux segments de la première partie (43) et à l'un des deux autres segments de la deuxième partie (44).

4. Dispositif (1') selon la revendication 1, dans lequel le composant de serrage (3') a la forme d'un cylindre creux autour de la pluralité de segments (41', 42', 43', 44').

5. Dispositif (1, 1') selon l'une des revendications précédentes dans lequel, lorsque la pluralité de segments (41, 42,43, 44, 41', 42', 43', 44', 41", 42") est dans une configuration de maintien, la première surface d'appui (71, 72) de chaque segment de l'au moins deux segments prend une forme d'appui conique, sphérique ou en forme de goulotte.

6. Système de maintien en tension, comprenant un dispositif (1, 1', 1") selon l'une des revendications précédentes, et comprenant le barreau de transmission (2), le barreau de transmission (2) étant un tirant sollicité en tension selon un axe du barreau de transmission (2), lorsque le composant de maintien et de libération (4) est en configuration de maintien.

7. Système de maintien en rotation, comprenant un dispositif (1, 1', 1") selon l'une des revendications précédentes, et comprenant le barreau de transmission (2'), le barreau de transmission (2') étant mobile en rotation autour d'un axe du barreau de transmission entre une première position angulaire et une deuxième position angulaire, lorsque le composant de maintien et de libération (4) est en configuration de libération.

8. Dispositif (1bis) selon la revendication 1 ou 2, dans lequel le composant de serrage (3) comprend au moins un ressort ou au moins un ensemble de rondelles élastiques, l'au moins un ressort ou l'au moins un ensemble de rondelles élastiques étant comprimé entre une face d'un segment (43) du composant de maintien et de libération et une face d'un autre segment (44) du composant de maintien et de libération, ledit segment (43) du composant de maintien et de libération étant logé à l'intérieur d'une cavité formée dans ledit autre segment (44) du composant de maintien et de libération.

## Patentansprüche

1. Wiederverwendbare Vorrichtung (1, 1', 1") zum Halten und Freigeben einer Getriebestange (2, 2"), wobei die Vorrichtung (1, 1', 1") eine Spannkomponente (3, 3'), eine Halte- und Freigabekomponente (4) und mindestens eine Lösekomponente (5, 5') umfasst, wobei die Halte- und Freigabekomponente (4) eine Vielzahl von Segmenten (41, 42, 43, 44, 41', 42', 43', 44', 41", 42") umfasst, wobei mindestens zwei Segmente (41, 42, 41', 42', 43', 44', 41", 42") der Vielzahl von Segmenten jeweils eine erste Auflagefläche (71, 72) umfassen, die so eingerichtet ist, dass sie auf einem Teil der Getriebestange (2) aufliegt, so dass der Teil der Getriebestange (2) zwischen den ersten Auflagefläche (71, 72) der mindestens zwei Segmente (41, 42, 41', 42', 43', 44', 41", 42") gepresst und/oder aufliegend auf diesen gehalten wird, wenn die Vielzahl von Segmenten (41, 42, 43, 44, 41', 42', 43', 44', 41", 42") sich unter Einwirkung eines von der Spannkomponente (3, 3') erzeugten Spanndrucks in einer Haltekonfiguration befindet, wobei mindestens zwei andere Segmente (43, 44, 41', 42', 43', 44', 41", 42") der Vielzahl von Segmenten (41, 42, 43, 44, 41', 42', 43', 44', 41", 42") jeweils eine zweite Auflagefläche (8, 8') umfassen, die so eingerichtet ist, dass sie auf einem Ende der mindestens einen Lösekomponente (5, 5') aufliegt, wobei jedes Segment der mindestens zwei anderen Segmente (43, 44, 41', 42', 43', 44', 41", 42") auch ein Segment der mindestens zwei Segmente (41, 42, 41', 42', 43', 44', 41", 42") sein kann,
**dadurch gekennzeichnet, dass** die mindestens eine Lösekomponente (5, 5') in einem ersten einfachwirkenden Formgedächtnismaterial ausgeführt ist, wobei das erste Material so eingerichtet ist, dass ab einer Übergangstemperatur jedes Ende der mindestens einen Lösekomponente (5, 5') einen Lösedruck auf die zweite Auflagefläche (8, 8') jedes Segments der mindestens zwei anderen Segmente (43, 44, 41', 42', 43', 44', 41", 42") ausübt, wobei der Lösedruck den von der Spannkomponente (3, 3') erzeugten Spanndruck kompensiert, indem die Spannkomponente (3, 3') einer Verformung unterzogen wird, um die Vielzahl von Segmenten (41, 42, 43, 44, 41', 42', 43', 44', 41", 42") der Halte- und Freigabekomponente (4) in eine Freigabekonfiguration zu bringen, wobei der Teil der Getriebestange (2, 2") freigegeben wird.

2. Vorrichtung (1, 1') nach Anspruch 1, wobei die Verformung der Spannkomponente eine elastische Verformung eines zweiten Materials der Spannkomponente (3, 3') ist, das so eingerichtet ist, dass es eine erste Form annimmt, nachdem es der elastischen Verformung unterzogen wurde.

3. Vorrichtung (1) nach einem der Ansprüche 1 oder 2, wobei die Spannkomponente (3) mindestens ein Längselement (33, 34) umfasst, und wobei die Halte- und Freigabekomponente (4) einen ersten Teil umfasst, der zwei Segmente (41, 43) umfasst, und einen zweiten Teil, der zwei andere Segmente (42, 44) der Vielzahl von Segmenten (41, 42, 43, 44) umfasst, wobei das mindestens eine Längselement (33, 34) mit jedem Ende des mindestens einen Längselements (33, 34) fest an einem der beiden Segmente des ersten Teils (43) bzw. an einem der beiden anderen Segmente des zweiten Teils (44) befestigt ist.

4. Vorrichtung (1') nach Anspruch 1, wobei die Spannkomponente (3') die Form eines Hohlzylinders um die Vielzahl von Segmenten (41', 42', 43', 44') herum aufweist.

5. Vorrichtung (1, 1') nach einem der vorhergehenden Ansprüche, wobei, wenn sich die Vielzahl von Segmenten (41, 42, 43, 44, 41', 42', 43', 44', 41", 42") in einer Haltekonfiguration befindet, die erste Auflagefläche (71, 72) jedes Segments der mindestens zwei Segmente eine konische, kugelförmige oder rinnenförmige Auflageform annimmt.

6. Spannungshaltesystem, umfassend eine Vorrichtung (1, 1', 1") nach einem der vorhergehenden Ansprüche und umfassend die Getriebestange (2), wobei die Getriebestange (2) eine Zugstange ist, die entlang einer Achse der Getriebestange (2) unter Spannung steht, wenn sich die Halte- und Freigabekomponente (4) in der Haltekonfiguration befindet.

7. Drehhaltesystem, umfassend eine Vorrichtung (1, 1', 1") nach einem der vorhergehenden Ansprüche und umfassend die Getriebestange (2'), wobei die Getriebestange (2') um eine Achse der Getriebestange herum zwischen einer ersten Winkelstellung und einer zweiten Winkelstellung drehbar ist, wenn sich die Halte- und Freigabekomponente (4) in der Freigabekonfiguration befindet.

8. Vorrichtung (1bis) nach Anspruch 1 oder 2, wobei die Spannkomponente (3) mindestens eine Feder oder mindestens einen Satz von Federscheiben umfasst, wobei die mindestens eine Feder oder der mindestens eine Satz von Federscheiben zwischen einer Seite eines Segments (43) der Halte- und Freigabekomponente und einer Seite eines anderen Segments (44) der Halte- und Freigabekomponente zusammengedrückt wird, wobei das Segment (43) der Halte- und Freigabekomponente im Inneren eines Hohlraums untergebracht ist, der in dem anderen Segment (44) der Halte- und Freigabekomponente ausgebildet ist.

## Claims

1. A reusable device (1, 1', 1") for holding and releasing a transmission bar (2, 2"), the device (1, 1', 1") comprising a tightening component (3, 3'), a hold and release component (4) and at least one loosening component (5, 5'), the hold and release component (4) comprising a plurality of segments (41, 42, 43, 44, 41', 42', 43', 44', 41", 42"), at least two segments (41, 42, 41', 42', 43', 44', 41", 42") of the plurality of segments each comprising a first bearing surface (71, 72) configured to bear on a part of the transmission bar (2), so that the part of the transmission bar (2) is held pressed between and/or in bearing on said first bearing surface (71, 72) of at least two segments (41, 42, 41', 42', 43', 44', 41", 42") when the plurality of segments (41, 42, 43, 44, 41', 42', 43', 44', 41", 42") is in a holding configuration under the effect of a tightening pressure generated by the tightening component (3, 3'), at least two other segments (43, 44, 41', 42', 43', 44', 41", 42") of the plurality of segments (41, 42, 43, 44, 41', 42', 43', 44', 41", 42") each comprising a second bearing surface (8, 8') configured to bear on one end of the at least one loosening component (5, 5'), each segment of the at least two other segments (43, 44, 41', 42', 43', 44', 41", 42") can also be a segment of the at least two segments (41, 42, 41', 42', 43', 44', 41", 42"),
**characterized in that** the at least one loosening component (5, 5') is made of a first single-acting shape memory material, said first material being configured so that, from a transition temperature, each end of the at least one loosening component (5, 5') exerts, on the second bearing surface (8, 8') of each segment of the at least two other segments (43, 44, 41', 42', 43', 44', 41", 42"), a loosening pressure, said loosening pressure compensating for the tightening pressure generated by the tightening component (3, 3'), by deforming the tightening component (3, 3'), so as to place the plurality of segments (41, 42, 43, 44, 41', 42', 43', 44', 41", 42") of the hold and release component (4) in the release configuration, in which the part of the transmission bar (2, 2") is released.

2. The device (1, 1') according to claim 1, wherein the deformation of the tightening component is an elastic deformation of a second material of the tightening component (3, 3'), configured to take back a first shape after having undergone said elastic deformation.

3. The device (1) according to any of claims 1 or 2, wherein the tightening component (3) comprises at least one longitudinal element (33, 34), and wherein the hold and release component (4) comprises a first part comprising two segments (41, 43) and a second part comprising two other segments (42, 44) of the plurality of segments (41, 42, 43, 44), the at least one longitudinal element (33, 34) being attached integrally by each end of the at least one longitudinal element (33, 34) respectively to one of the two segments of the first part (43) and to one of the other two segments of the second part (44).

4. The device (1') according to claim 1, wherein the tightening component (3') is in the shape of a hollow cylinder around the plurality of segments (41', 42', 43', 44').

5. The device (1, 1') according to any of the preceding claims, wherein, when the plurality of segments (41, 42, 43, 44, 41', 42', 43', 44', 41", 42") is in a holding configuration, the first bearing surface (71, 72) of each segment of the at least two segments takes a conical, spherical or trough-shaped bearing shape.

6. A tension-holding system, comprising a device (1, 1', 1") according to any of the preceding claims, and comprising the transmission bar (2), the transmission bar (2) being a tie rod tension-biased along an axis of the transmission bar (2), when the hold and release component (4) is in the holding configuration.

7. A rotation-holding system, comprising a device (1, 1', 1") according to any of the preceding claims, and comprising the transmission bar (2'), the transmission bar (2') being movable in rotation about an axis of the transmission bar between a first angular position and a second angular position, when the hold and release component (4) is in the release configuration.

8. The device (1bis) according to claim 1 or 2, wherein the tightening component (3) comprises at least one spring or at least one set of elastic washers, the at least one spring or the at least one set of elastic washers being compressed between one face of one segment (43) of the hold and release component and one face of another segment (44) of the hold and release component, said segment (43) of the hold and release component being housed within a cavity formed in said other segment (44) of the hold and release component.
